Europäisches Patentamt

European Patent Office

Office européen des brevets

(19)

(11) Publication number: **0 101 301**
**A1**

(12) # EUROPEAN PATENT APPLICATION

(21) Application number: **83304637.8**

(22) Date of filing: **11.08.83**

(51) Int. Cl.³: **G 11 B 5/09**

(30) Priority: **13.08.82 GB 8223352**

(43) Date of publication of application:
**22.02.84 Bulletin 84/8**

(84) Designated Contracting States:
**BE DE FR IT NL SE**

(71) Applicant: **OXFORD MEDICAL SYSTEMS LIMITED**
**1 Kimber Road**
**Abington Oxfordshire OX14 1BZ(GB)**

(72) Inventor: **Morris, David Arthur**
**6 Paddock Close**
**Wantage Oxfordshire OX12 7EQ(GB)**

(74) Representative: **Davis, Norman Norbridge**
**11 Holmfield Avenue**
**London NW4 2LP(GB)**

(54) Apparatus and methods for multi-channel signal recording.

(57) A multi-channel signal recorder e.g. a multi-track tape recorder records a greater number of channels than number of tracks available on the recorder. This is achieved by inputting the channels to individual buffer stores in a data memory (4) and then transferring in cyclic sequence the contents of a number of buffer stores recorded over preset periods of time as blocks of signal to a common record track at rates which are faster than the input rate by a number of times at least equal to the number of buffer stores feeding a track. Marker signals may be inserted between successive blocks.

Fig.2.

EP 0 101 301 A1

Croydon Printing Company Ltd.

- 1 -

## APPARATUS AND METHODS FOR MULTI-CHANNEL
## SIGNAL RECORDING

This invention relates to apparatus and methods for multi-channel signal recording.

There is a requirement to record signals derived from a number of separate sources which are emitting simultaneously. Such a requirement arises for example in the monitoring of EEG signals. One convenient device for recording such signals is a multi-track tape recorder. However the number of input channels that can be recorded in this way is limited to the number of tracks available. Thus where a tape recorder which uses tape in the format of the compact cassette is used only four tracks are normally available, in which case a maximum of only four channels can be recorded simultaneously and thus only four sources can be handled.

It is an object of the invention to provide a recorder capable of recording a greater number of channels than it has tracks.

According to the invention in one aspect a multi-channel signal recorder comprises a plurality of buffer stores, means for applying input signals from each individual channel to be recorded to respective buffer stores, a record medium having a lesser number of record tracks than channels to be recorded, and means for transferring the contents of more than one buffer store recorded over preset periods of time in cyclic sequence to a common record track as a series of blocks of signal.

Preferably the means for transferring operates to transfer signals from a buffer store to a record track at a faster rate than the rate of input to the buffer stores by a number of times at least equal to the number of buffer stores feeding a track.

In carrying out the invention an additional track may be provided together with means for recording a timing signal in the additional track so that on playback any transient differences between recording and playback speed can be compensated for.

Preferably a plurality of record tracks is provided each arranged to carry a corresponding number of blocks of signal in each cyclic sequence.

- 2 -

In a preferred embodiment of the invention the record medium is magnetic tape. However the invention is not limited to magnetic tape and any medium capable of carrying one or more tracks of information signals can be used.

According to the invention in another aspect a method of recording a plurality of simultaneously generated signals comprises the steps of inputting each signal in parallel to its individual buffer store and transferring the contents of a plurality of buffer stores in cyclic sequence to a common record track as a series of blocks of signal, the said transferring step taking place at a faster rate than the rate of inputting by a number of times at least equal to the number of signals being recorded on a track.

Marker signals may be recorded between blocks of signal and may be used to define the instants of commencement and termination of each signal block. The amplitude of the marker signals may provide a reference value for the amplitude of the signals in the following block.

In order that the invention may be more fully understood reference will now be made to the accompanying drawings in which:

Figure 1 illustrates diagrammatically a typical recording format,

Figure 2 is a block diagram of a recorder embodying the invention,

Figure 3 illustrates a detail of the recording format shown in Figure 1,

Figure 4 is a diagram illustrative of the way in which signals are replayed,

Figure 5 is a block diagram of replay apparatus, and

Figure 6 shows a microprocessor sub-system used in the apparatus of Figure 5 in more detail.

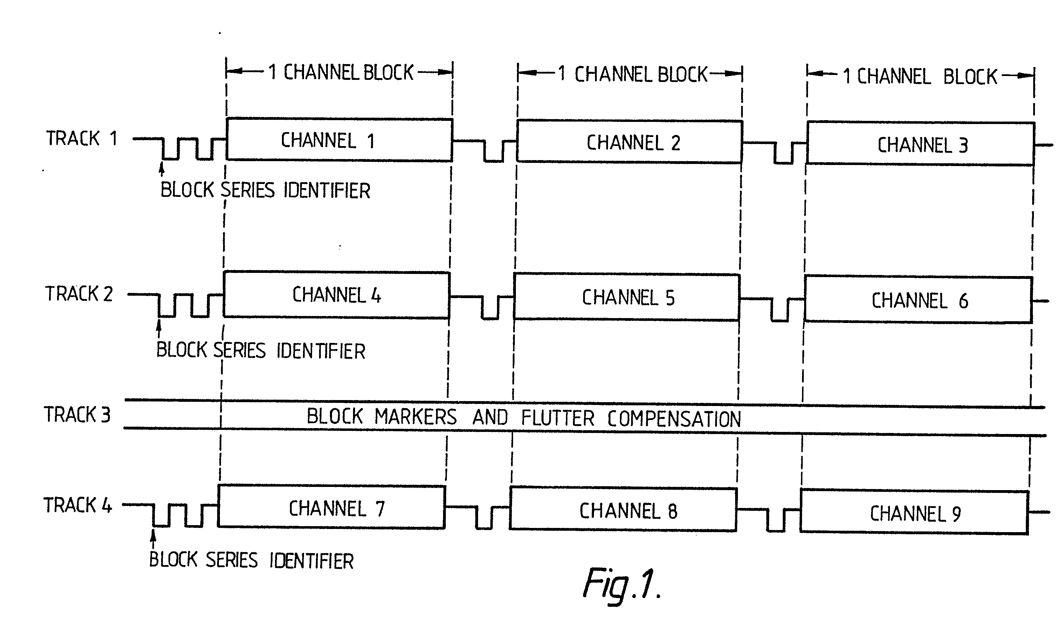

Referring now to Figure 1 there is shown therein in diagrammatic form a magnetic tape having four tracks labelled respectively track 1, track 2, track 3 and track 4. Such a tape can conveniently be in the format of the well-known "compact cassette". Of the four tracks, track 3 is reserved for a control channel while the remaining tracks are used to carry information signals. Each track carries blocks of data derived from three separate channels which are recorded on the track in sequence. Thus the recorder can record up to nine channels. It may be desirable to commit one of the channels to recording a digital time-of-day code. The remaining eight channels can then be used to record data. The respective blocks in a track are separated from each other by gaps and appropriate channel time marker signals are recorded in the gaps so that the individual blocks of data can be properly routed on playback. In one preferred arrangement block series identifier signals are provided before each cyclic series of blocks.

Control track 3 carries signals which occur in the time gaps between blocks so that the block series identifier signals and time marker signals may be correctly identified as such. In addition, track 3 carries signals which are recorded simultaneously with the recording of the blocks on the other tracks and provide a time reference which enables the timing of the data within each block to be accurately determined despite inevitable speed fluctuations or "flutter" which is introduced by the process of recording and replay of magnetic tape.

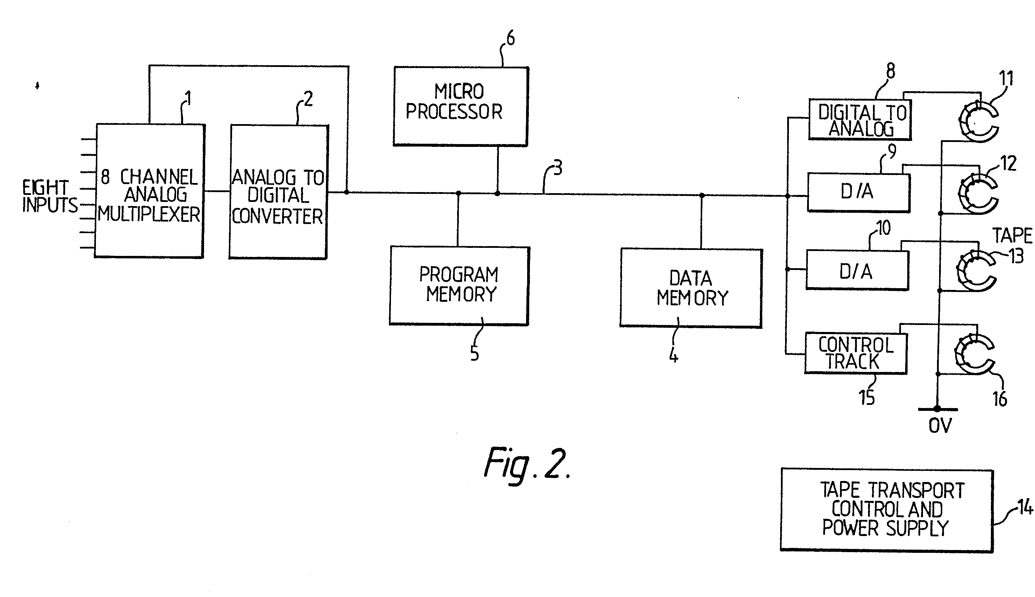

The apparatus for providing the recording format of Figure 1 is illustrated in Figure 2. The eight separate inputs are fed to eight channels through multiplexer 1 the output of which is applied to an analogue-to-digital converter 2 and thence directed along a data highway 3 to a data memory 4. Data memory 4 contains a number of buffer stores to which the input signals from the respective sources received along data highway 3 are directed as they arrive. The recorder functions under the control of a program contained in a program memory 5 and which is carried out by means of a microprocessor 6. The stored program functions to direct the contents of the buffer stores in memory 4 to one of three different digital-to-analogue converters 8, 9 and 10 each of which feeds a respective recording head 11, 12 and 13 in contact with a magnetic

- 4 -

tape which in Figure 2 is moved at right angles to the plane of the paper by a conventional tape transport mechanism 14. The information to be recorded on the control track is fed through a separate digital-to-analogue converter 15 and thence to a fourth recording head 16 which records on track 3 of the tape.

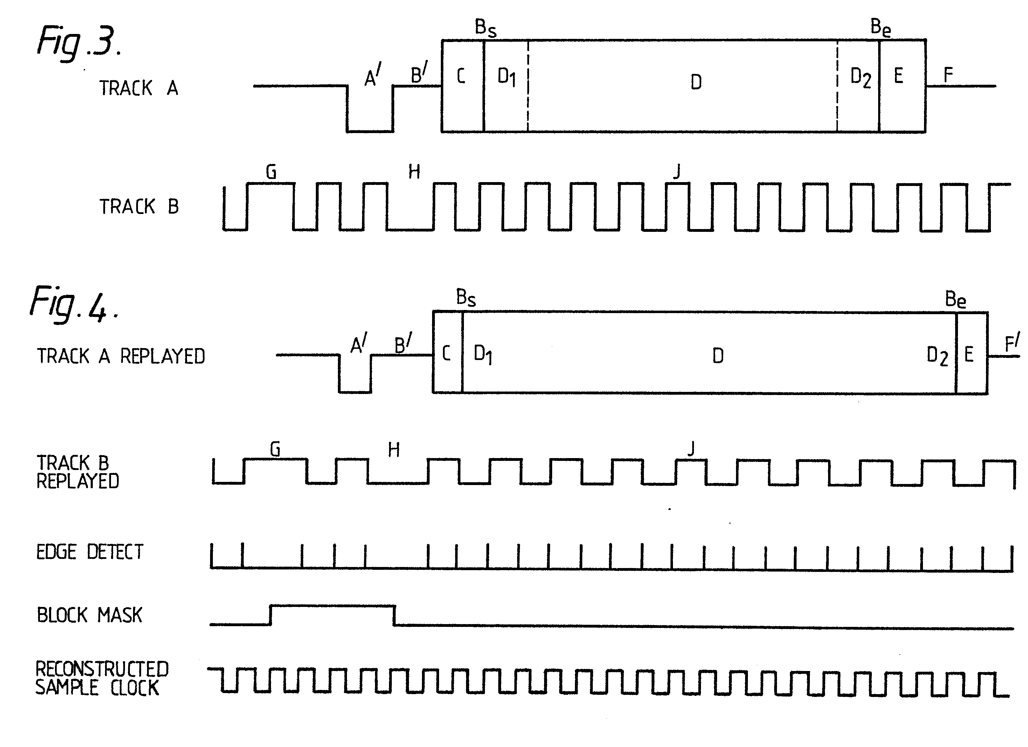

Under the control of the program the contents of the buffer stores in data memory 4 which have been stored over preset periods of time are transferred to the appropriate recording head in cyclic sequence each at a rate which will be somewhat greater than three times the rate at which they are received in real time. In addition, there is a permanent store in program memory 5 which provides the market signals when required. These marker signals are described in detail with respect to Figure 3.

Referring now to Figure 3 there is shown therein recorded signals on both a track A and a track B. Track A can be any one of tracks 1, 2 or 4 while track B corresponds to the track 3 shown in Figure 1. On track A the marker signals before the commencement of a block comprise a signal A' which is a sharp transition used as a time marker for track A and indicates a preset time before the commencement of a data block. After signal A' a signal B' is provided which is at a preset recorded level. This level may conveniently define zero volts, thus any signal in a block which is above that level is positive and any signal below that level is negative.

The block of signals being recorded has an initial section C followed by a sequence of signals comprising sections $D_1 + D + D_2$. Finally, the block terminates with a section of signal E. The initial section C is a duplicate of the section $D_2$ of the previous block of the same input channel while the final section E is a duplicate of section $D_1$ of the next succeeding block of the same input channel. This duplication of signals at the start and end of each block overcomes problems on replay if there is a sudden change in signal level at the start $B_s$ of each block of signals and again at the end $B_e$ of each block. The addition of sections C and E before and after each block in this way is controlled by

- 5 -

the program. After the termination of the block a signal F' is recorded at a preset recording level, conveniently zero volts, and this corresponds to the signal ʀ' before the start of the block.

All the information carrying tracks have a similar format to track A. However, the control track B is different and this track carries primarily a signal J of constant repetitive rate which acts as a flutter compensation signal and enables the blocks to be kept in step with the recorded signals when the blocks are replayed. In addition, track B carries signals G and H which are each in the form of missing transitions of signal J.

The use of control track B during replay is shown more clearly with reference to Figure 4. The edges in track B are used to generate narrow spike-like pulses which reconstruct a sample clock using known phase locked loop techniques and this clock keeps time with the sample clock used in the recording operation. In the event of any such pulses being missed when expected, for example at G, a block mask pulse is commenced and this block mask pulse terminates on detection of the next missing transition at H. The block mask pulse acts as a time window within which a time marker A' on track A can be detected if present to indicate that a block of signal is about to be received. It is preferably to use the block mask signal as a window rather than as the actual timing signal for the commencement of a block since signals on one track cannot be used to define points of another track with sufficient precision due to the possibility of tape skew or azimuth error across the record and replay tape heads.

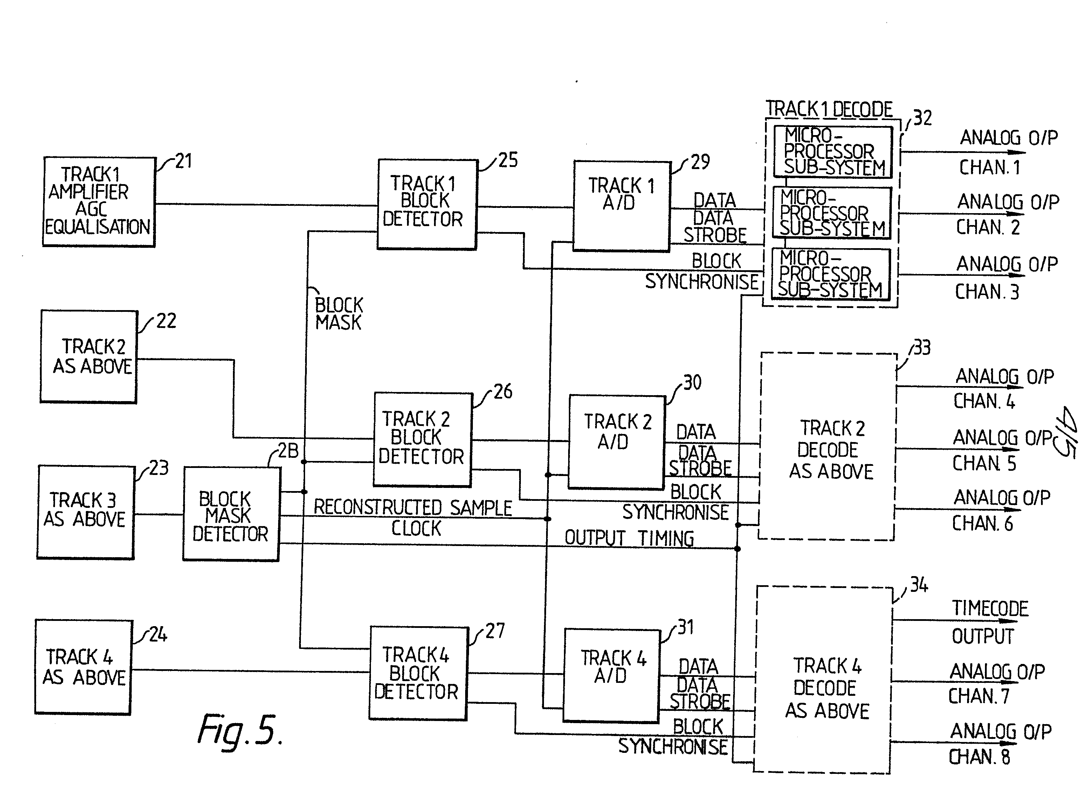

A block diagram of the replay apparatus is shown in Figure 5. Four magnetic tape replay heads are positioned to pick up signals from each of the four tracks of the magnetic tape and these signals are passed to their respective amplifiers and AGC equalisation circuits 21, 22, 23, 24.

The track 1, track 2, and track 4 signals from circuits 21, 22 and 24 then pass in turn to respective block detectors 25, 26 and 27 and respective analogue-to-digital convertors 29, 30 and 31. From thence the signals pass in digitised form to respective decoders 32, 33 and 34.

The output from circuit 23 which contains the control track information is passed to a block mask detector 28, which provides the block mask signal shown in Figure 4. This passed to each of the block detectors 25, 26 and 27. In addition the block mask detector 28 provides the reconstructed sample clock shown in Figure 4 which is passed to each of the analogue-to-digital convertors 29, 30 and 31. It also provides an output timing signal, derived from the reconstructed sample clock, which is passed directly to each of the three decoders 32, 33 and 34.

Each block detector uses the block mask signal to locate the timing transition A' and the preset recorded level B' for its respective track. The timing transition A' is used to generate a block synchronisation signal and the preset recorded level B' is used to determine the absolute recorded level for the following block.

Each analogue-to-digital convertor uses the reconstructed sample clock to digitise the analogue information passed to it from the block detector and provides two outputs, being the digitised data for each block and a data strobe signal indicating that a data word is available to be read.

Each track decoder is supplied with the digitised data and data strobe signal from its associated analogue-to-digital convertor, together with a block synchronisation signal from its associated block detector and the output timing signal from the block mask detector.

Each decoder 32, 33 or 34 comprises three parallel microprocessor sub-systems and each of these sub-systems receives the four inputs referred to above, namely the digitised data, the data strobe signal, the block synchronisation signal and the output timing signal. In addition, means are provided to allow the three microprocessor sub-systems operating on a single track of data to communicate sequence control information one with another. Since there are three information carrying tracks and each track contains blocks from three channels there is a total of nine channels of information and accordingly nine microprocessor sub-systems are provided.

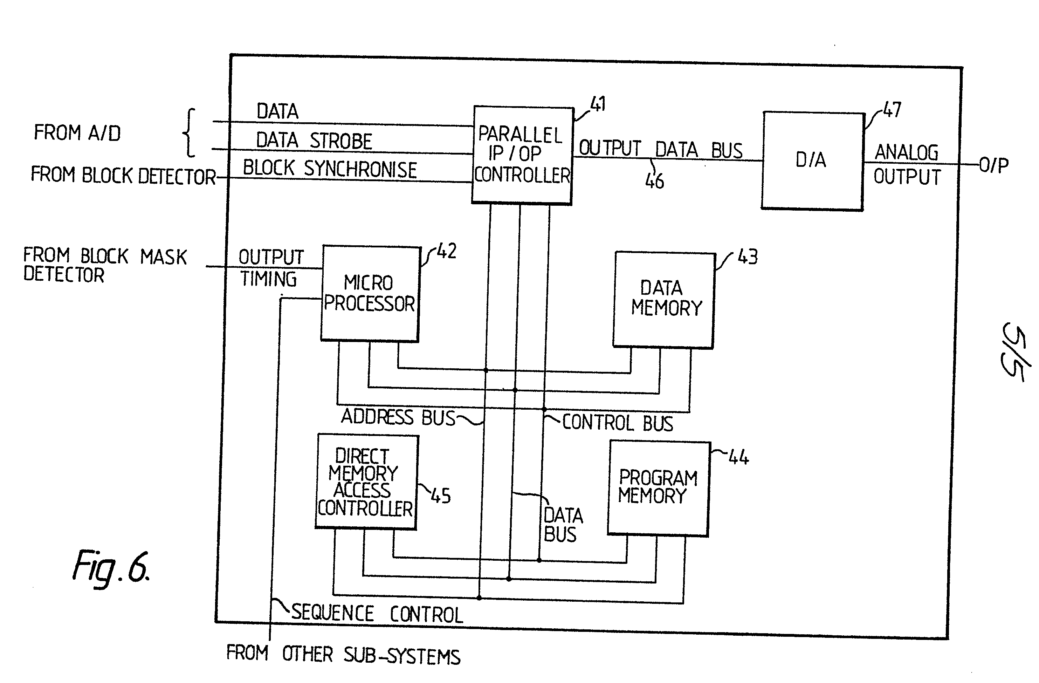

A typical one of the nine microprocessor sub-systems is illustrated in Figure 6. It consists of a microprocessor 42, a program memory 44, a direct memory access controller 45 and a parallel input/output controller 41, linked by a ous structure comprising separate address, data and control buses. Three of the inputs to the sub-system, namely the digitised data, the data strobe signal and the block synchronisation signal, are fed to parallel input/output controller 41. The output timing signal is fed directly to microprocessor 42. From parallel input/output controller 41 the data is written directly to data memory 43 under the control of the direct memory access controller 45. Microprocessor 42 operates under the control of the program stored in program memory 44 to supervise the operation of direct memory access controller 45 such that only the block of data appropriate to a particular channel is written into the data memory 43 for that channel. Within the microprocessor sub-system for the first block of a sequence of three, this is achieved by uniquely detecting the block series identifier signal in the block synchronising waveform. Within the sub-systems for the remaining two blocks of the sequence of three it is achieved by means of the sequence control signal derived from the sub-system for the first block of the sequence.

In order to reconstruct the original signals the various blocks derived from the same signal source must be joined up and the individual signal channels reconstituted and it is necessary to ensure that when blocks from the same channel are joined up their replay level corresponds. The joining up of blocks from a common source is achieved by the use of the auxiliary signals recorded on tracks A and B to generate the sequence control signals. In one example a block of information comprising 256 samples of data between points $B_s$ and $B_e$ commenced 32 sample pulses after the time signal A' on track A which is detected in the time window provided by the block mask signal. The end $B_e$ of the block is found by counting the number of sample pulses in the block.

To ensure that when successive blocks from the same channel have corresponding replay level, they are joined up without

- 8 -

discontinuities of level, use is made of the recorded signal B' at say 0 volts and if therefore the replayed signal from the first data point $S_o$ is clamped to 0 volts at B', then the absolute recorded level of the entire block can be recovered. Ideally, with no tape or system noise the blocks would now join up at the same level. In practice, however, the measured level of the final data point $S_F$ at F' will not generally be 0 volts. However, blocks will be temporarily stored in the data memories 43 during replay and hence the actual recorded replay level of point $S_f$ is known. By performing the calculation given below each data point may have its level corrected prior to outputting the block from the data memory so as to reconstruct the original signal.

The correction E required to be added to the level $S_n$ of the Nth data point from the starter of a block is given by

$$E = N(S_0 - S_F)/F$$

where $S_0$ and $S_F$ are the replay levels of signals at B and F respectively and F is the total number of data points.

In addition the microprocess for each subsystem acts under the control of the output timing signal from the block mask detector to send the processed data back to the parallel input/output controller 41 and thence via an output data bus 46 to a digital-to-analogue convertor 47. The analogue output data from each microprocessor sub-system thus relates only to a single signal channel. By this means the outputs from the track decoders are available on nine separate output terminals corresponding to the eight input channels of the recorder together with the additional timing channel.

- 9 -

## CLAIMS

1. A multi-channel signal recorder comprising a plurality of buffer stores, means for applying input signals from each individual channel to be recorded to respective buffer stores, a record medium having a lesser number of record tracks than channels to be recorded, and means for transferring the contents of more than one buffer store recorded over preset periods of time in cyclic sequence to a common record track as a series of blocks of signals.

2. A recorder as claimed in Claim 1 in which means are provided for recording marker signals between blocks of signal.

3. The recorder as claimed in either one of the preceding claims in which the said means for transferring operates to transfer signals from the buffer store to a record track at a faster rate than the rate of input to the buffer stores by a number of times at least equal to the number of buffer stores feeding the track.

4. The recorder as claimed in any one of the preceding claims in which an additional track is provided together with means for recording a timing signal in the additional track so that on playback any transient differences between recording on playback speed can be compensated for.

5. The recorder as claimed in any one of the preceding claims in which a plurality of record tracks is provided each arranged to carry a corresponding number of blocks of signal in each cyclic sequence.

6. The recorder as claimed in any one of the preceding claims in which the record medium is magnetic tape.

7. A method of recording a plurality of simultaneously generated signals comprising the steps of inputting each signal in parallel to its individual buffer store and transferring the contents of a plurality of buffer stores in cyclic sequence to a common record track as a series of blocks of signal, the said transferring step taking place at a faster rate than the rate of inputting by a number of times at least equal to the number of signals being recorded on a track.

8.  The method as claimed in Claim 7 in which marker signals are recorded between blocks of signals.

Fig.1.

Fig.2.

2/5

# Fig.3.

**TRACK A**

**TRACK B**

# Fig.4.

**TRACK A REPLAYED**

**TRACK B REPLAYED**

**EDGE DETECT**

**BLOCK MASK**

**RECONSTRUCTED SAMPLE CLOCK**

Fig.5.

Fig.6.

FROM A/D { DATA / DATA STROBE

FROM BLOCK DETECTOR — BLOCK SYNCHRONISE

PARALLEL IP / OP CONTROLLER — 41

OUTPUT DATA BUS — 46

D/A — 47

ANALOG OUTPUT — O/P

FROM BLOCK MASK DETECTOR — OUTPUT TIMING

MICRO PROCESSOR — 42

DATA MEMORY — 43

ADDRESS BUS

CONTROL BUS

DIRECT MEMORY ACCESS CONTROLLER — 45

DATA BUS

PROGRAM MEMORY — 44

SEQUENCE CONTROL

FROM OTHER SUB-SYSTEMS

5/5

0101301

0101301

European Patent
Office

EUROPEAN SEARCH REPORT

Application number

EP 83 30 4637

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 075 665 (PHILIPS) * Column 1, lines 1-24; column 12, line 59 - column 14, line 34; column 15, lines 24-41; figures 1, 4 * | 1-3,7, 8 | G 11 B 5/09 |
| X | GB-A-2 059 135 (RCA) * Page 1, line 101 - page 2, line 72; figures 1, 2 * | 1,3,4, 6,7 | |
| A | DE-A-2 658 530 (SIEMENS) * Claims 1, 2 * | 4,6 | |

TECHNICAL FIELDS
SEARCHED (Int. Cl. ³)

A 61 B 5/00
G 11 B 5/00
G 11 B 23/00
G 11 B 27/00
H 04 B 1/00

The present search report has been drawn up for all claims

| Place of search BERLIN | Date of completion of the search 25-10-1983 | Examiner WIBERGH S.R. |
|---|---|---|